Europäisches Patentamt

European Patent Office

Office européen des brevets

(11) Publication number: **0 086 097**
**A1**

## (12) EUROPEAN PATENT APPLICATION

(21) Application number: **83300576.2**

(22) Date of filing: **04.02.83**

(51) Int. Cl.³: **B 65 H 7/02**
**G 06 K 13/067**

(30) Priority: **04.02.82 GB 8203247**

(43) Date of publication of application:
**17.08.83 Bulletin 83/33**

(84) Designated Contracting States:
**AT BE CH DE FR IT LI LU NL SE**

(71) Applicant: **WATKISS AUTOMATION LIMITED**
**Holme Court**
**Biggleswade Bedfordshire SG18 9ST(GB)**

(72) Inventor: **Watkiss, Michael C.**
**Holme Court**
**Biggleswade Bedfordshire SG18 9ST(GB)**

(74) Representative: **Thomson, Roger Bruce**
**POLLAK MERCER & TENCH High Holborn House 52-54**
**High Holborn**
**London WC1V 6RY(GB)**

(54) **Detecting apparatus and method.**

(57) Changes in number of an object or objects are detected by sensing (at 10) a parameter of one or a predetermined number of such objects, generating a digital signal (at 18) from the analogue value, setting up a reference level within digital processing means (20), repeating the sensing step for further such objects, updating the reference level to reflect changes in the sensed parameter value over a period of time, and actuating an indicator or controller (25, 26, 27) whenever the sensed value falls outside a tolerance band based on the reference level. Preferably, the sensed parameter is the change in capacitance between two plates (12a, 12b) produced by the presence or absence of the object or objects. The system is especially appropriate for detecting misfeeds in the supply of sheets of paper, card or like material.

FIG. 1

EP 0 086 097 A1

Croydon Printing Company Ltd.

DETECTING APPARATUS AND METHOD

SPECIFICATION

## FIELD OF THE INVENTION

This invention relates generally to methods of and apparatus for detecting a change in number of an object or objects, i.e. detecting when an object which should be present is absent or is present in a greater number than desired, or in the case of a desired plurality of objects, detecting when the number of such objects increases or decreases.

The invention is particularly applicable to the sensing of sheets of material, such as paper and card, and is especially appropriate for the detection of sheets of material in a sheet feeding system where the sheets are in motion. However, the invention is not limited to sheet-sensing systems, but has much wider application to the detection of objects generally, including both static and dynamic detecting systems.

As will be described later, the present invention is particularly appropriate for monitoring the feeding of sheets of paper, card or like material in sheet-handling machinery, and especially in collating machines.

## SUMMARY OF THE PRIOR ART

One known technique for detecting sheets of paper and for sensing misfeeds is a photoelectric technique where a light beam is directed towards the sheet path and associated electrical circuitry functions to detect misfeeds, i.e. the feeding of for example no sheet of paper, or two sheets of paper, where only one sheet should be fed. Such known systems suffer, among other things, from the fact that the sensing operation results in an analogue signal which is then treated as an analogue signal throughout the subsequent electrical circuitry. This means that the electrical circuitry has to be relatively complex, and therefore expensive, and it is also difficult to achieve and maintain the desired degree of accuracy. Additionally, in some known systems one can only use such a system with certain types of sheet material having suitable optical characteristics.

It is also known to use the capacitance of an object as a measurable parameter. Sensing capacitance is a known technique for sensing paper thickness, in that it is known that the capacitance of the sheet will vary in dependence upon the thickness of the sheet. However, one of the problems with many situations, particularly dynamic situations, is that over the course of time, for example during a long run in a piece of paper-handling machinery, the characteristics of the object being monitored may change gradually. This can arise from changes in the physical nature of the object itself, or from changes in the temperature or humidity of the environment for example. In the existing sensing systems, whether based on the monitoring of optical properties or capacitance, the system is initially set up to a standard for a single object or a defined number of objects, and a tolerance is provided on each side of the standard level, beyond which the system will trigger a response and the machine will shut down. In practice, because of the changing characteristics, one finds that machines tend to stop more often because of the changing characteristics than because of actual changes in number of the object or objects, e.g. misfeeds in the case of sheet material.

## SUMMARY OF THE INVENTION

In accordance with the invention there is provided a method of detecting a change in number of an object or objects, which comprises sensing a parameter of one or a predetermined number of such objects, from the sensed information generating a digital signal representing the parameter value, using the digital signal to set up a reference level within digital processing means, repeating the sensing step for further such objects, using the digital processing means to determine for each sensing step whether the sensing parameter value lies within predetermined limits relative to the reference level, updating the reference level in said digital processing means to reflect changes in the sensed parameter value for said one or said predetermined number of said objects, and actuating indicating and/or control means whenever the sensed parameter value falls outside said predetermined limits.

Also in accordance with the invention there is provided apparatus for detecting a change in number of an object or objects, comprising sensing means to sense a parameter of one or a predetermined number of such objects located in a sensing zone, converter means to generate from the sensed information a digital signal representing the parameter value, digital processing means arranged to receive said digital signal and in accordance therewith to set up a reference level with tolerance limits, said digital processing means also being arranged to update the reference level at predetermined intervals to reflect changes in the sensed parameter value, and output means to carry signals indicative of whenever the sensed parameter value falls outside said predetermined limits.

In a preferred embodiment of the invention, where capacitance is measured, this information is converted into a frequency signal which can then be digitised and used. However, the invention is applicable also to an optical sensing system where the optical information from a sensing device can similarly be converted into digital information with a continual updating of the reference level.

The manner in which the updating of the reference level is carried out can be chosen according to particular needs. For example, one can arrange that the reference level is updated after the sensing of each individual object, e.g. sheet, the new reference level then being the measured value for the preceding object. Alternatively, and preferably, the system is arranged to compute the average reading taken over the previous say fifty objects, and to use this computed average figure as the new reference level. Such an averaging procedure will cater for gradually changing characteristics of the objects, which is the main problem which the known systems do not overcome.

In a capacitance sensing system, one preferably uses sensing means with screening means to cut down the effect of outside interference, especially the effect of the operator's fingers, which in paper handling machinery is a fact which has to be taken into careful consideration. The presence of the operator's fingers near the sensing plate can have as great an effect as the presence of an extra sheet of paper. Therefore, the sensing plate must either be positioned within the paper handling machinery so that it is inherently screened by the machinery, or else suitable additional screening means must be used. Plates of aluminium or like material can be used as the screening means, these plates being positioned on each side of the sensing plate.

BRIEF DESCRIPTION OF THE DRAWINGS

The present invention will now be described in more detail by way of example and with reference to the accompanying drawing, in which:

Fig. 1 is a schematic diagram illustrating one embodiment of detecting system of the present invention;

Fig. 2 is a diagrammatic representation of the capacitance-to-frequency converter of the detector of Fig. 1;

Fig. 3 shows an alternative arrangement of plates in the detector; and,

Fig. 4 is a partial schematic diagram showing how the detecting system of the present invention can be applied to the table of a collating machine.

DESCRIPTION OF THE PREFERRED EMBODIMENT

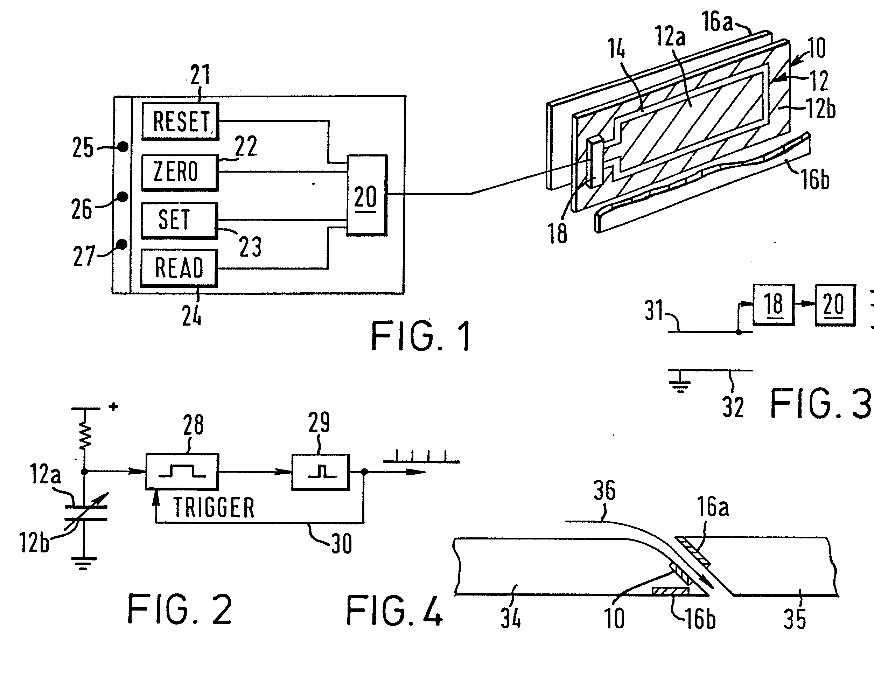

Referring first to Fig. 1, this shows a sensing plate 10 which is made of fibreglass material with an electrically conductive copper layer 12 on one face. A generally rectangular track 14 is etched out of the copper layer 12 to provide a configuration which will sense the capacitance of an object or objects, such as a sheet of paper or like material, positioned adjacent to the flat surface of the plate 10. The track 14 effectively divides the plate into two condenser plates, one 12a within the track 14 and one 12b outside the track 14. One of the plates 12a or 12b is connected to ground and the other plate to an appropriate potential. Placing an object on the plate 10 so as to bridge the track 14 will then change the capacitance between plates 12a and 12b. The plate 10 is bounded on each side by a screening plate 16a, 16b of aluminium or like material which cuts down the effect of outside interference which would otherwise affect the capacitance reading from the sensing plate. It has been found that screening plates 16a, 16b of substantially the same dimensions as the sensing plate 10 constitute effective screens. Although screening plates are often desirable, it should be understood that the device will function to produce capacitance changes without such screens.

Mounted on the sensing plate 10 at the end of the track 14 is an analogue-to-digital converter circuit, here a capacitance-to-frequency converter circuit 18, which provides an output frequency signal proportional to the sensed capacitance value. The output frequency signal from the converter circuit 18 is in digital form and is fed to a microprocessor circuit 20 which can perform the necessary computation on the digitised information. Associated with the microprocessor 20 are four control buttons 21, 22, 23 and 24 and three signal lamps 25, 26 and 27. Control button 21 is a reset button; control button 22 is a zero button; control button 23 is a button which when depressed will set the circuit for one object or a defined number of objects; and control button 24 is a "read" button. Control lamp 26 is a green lamp which indicates that the desired one object or desired number of objects is present on the sensing plate 10. Lamp 25 is an orange lamp which when illuminated indicates that there are too many objects on the plate 10. Lamp 27 is a red lamp which when illuminated indicates that there is no object or fewer than the desired number of objects on plate 10.

Fig. 2 is a schematic illustration of the capacitance-to-frequency converter shown at 18 in Fig. 1. The two plates 12a and 12b are represented as a variable capacitor having its capacitance value fed as an analogue input to a crystal-controlled oscillator circuit comprising first and second monostables 28 and 29. The output pulses from the first monostable 28 are longer than those of the second monostable 29, and the output of the second monostable 29 is fed back on line 30 to trigger the first monostable 28. The output of the oscillator is therefore a series of short pulses whose frequency is proportional to the analogue input.

In use, and taking sheets of paper as an example of an object, the detector is operated by first pressing the zero button 22 when there is no object within the gap between the plate 10 and plate 16b. This sets the zero datum level, i.e. the base line, from which subsequent measurements are made. A single sheet of paper for example is then placed within the gap and the "set" button 23 is pressed. This causes the capacitance measurement to be taken, the information converted into a frequency signal, and the frequency signal to set up a level in the microprocessor 20 as the "actual" value for one sheet. The microprocessor operates with a predetermined tolerance to each side of the "actual" value. In normal use this tolerance can be for example 25% of the "actual" value to either side of the actual value. This tolerance band can be varied as necessary for the particular circumstances of a given system.

When that reference sheet is removed from the gap and is replaced by another sheet, the "read" button 24 is depressed and the device will measure the capacitance of that sheet, convert the information to a frequency signal, and the microprocessor will then determine whether this falls within the tolerance band. If it does, then the green lamp 26 will light up. If it does not, then either lamp 25 or lamp 27 will light up, depending upon whether the capacitance reading is above or below the preset band.

As mentioned above, the microprocessor circuitry continually updates its data base on which it calculates whether any new reading falls within the tolerable limits which have been preset. This updating can either be done after each individual measurement, or alternatively, and preferably, by an averaging process after receipt of a number of readings.

Although in the arrangement descibed above and illustrated in Fig. 1 there are control buttons 21 to 24 and signal lamps 25 to 27 for controlling and displaying the various operational steps, it should be understood that these are shown by way of example only. In practice, with the detector embodied in a machine, the signals from the detector would be handled directly by the machine control system. The machine would be programmed to respond automatically to the various signals, e.g. stop the machine, correct the error, etc.

Although a rectangular sensing plate 10 has been illustrated in Fig. 1, other shapes and configurations of sensing plate could alternatively be used, for example circular. The track configuration can also be modified as desired. Moreover, instead of using a flat sensing plate with the two condenser plates in a single plane as in Fig. 1, one could alternatively use an arrangement such as is illustrated in Fig. 3 with two condenser plates 31 and 32 spaced parallel to each other, with one plate 32 connected to ground. The object or objects to be detected are then placed in or passed through the gap between the plates 31, 32. With a pair of spaced plates 31, 32 as in Fig. 3 it is not necessary for the object to be in contact with either plate, whereas with a flat sensing plate 10 as in Fig. 1 it is desirable, if detecting sheets, for the sheets to be held down in contact with the plate.

Fig. 4 shows schematically how the detector system of the present invention can be applied to a rotary collating machine where stacks of sheets are positioned on a circular table and the bottommost sheet of each stack is peeled away downwards through slots formed radially in the table. Two adjacent sections are indicated at 34 and 35. These preferably rotate relative to a plurality of stationary stacks of sheets which are positioned around the table.    As the peeling
action takes place, upon rotation of the table, the
bottommost sheet is caused to follow a downward path as
indicated by the arrow 36 to travel down through the
generally oblique slot between the table segments.
What one wishes to detect primarily is whether just one
sheet has been correctly peeled away, or whether no
sheet has been detached, or whether two or more sheets
have passed down into the slot together.    By placing
the sensor plate 10 in one sloping face of the slot
in the table, the passage of the sheets down over the
plate will cause the associated monitoring circuitry
to detect whether the machine is operating properly.
All the operator has to do is set up a basic reading
using the "set" button 23 before the machine is started
into operation, and the monitoring circuitry will
thereafter exercise complete oversight and control of
the machine as necessary.    Even if two sheets pass
down through the slot in partial overlapping relationship, rather than fully face-to-face, the detector will
still initiate a "fault" response.    In the embodiment
shown in Fig. 4 the screening plates 16a and 16b are
shown built in to the table segments.    Positioned
in this way they are sufficiently well able to screen
the detector plate 10 itself against the influence of a
hand or fingers placed above or below the table slot.
One could alternatively omit the screening plates.

Although the detector of the present invention
has been described above particularly in connection
with its use for detecting single objects, e.g. sheets,
the invention is also applicable to batch monitoring of
objects, such as sheets of paper, card or like
material.    For example, if one has a bundle of, say,
one hundred sheets of paper , such as banknotes, then
these can be inserted into the detector and a reference base set up in the circuitry for subsequent comparison purposes. The insertion of another bundle of sheets into the detector will then indicate whether the same number of sheets are present as in the original sample. In the case of batch checking, the tolerance band to either side of the reference figure must be less than in the case of the monitoring of single sheets. However, the actual tolerance band which is preset can be varied just by modifying the microprocessor circuitry. The sensitivity of the device can thus be modified to suit particular circumstances. Although particular reference has been made to the detection of sheets of material, the detector can be used with anything which will produce a change in the capacitance between two charged plates. This includes wooden objects, such as pencils, and food products, such as biscuits, etc.

The present invention has widespread application to all sorts of machinery, especially to dynamic situations, such as with objects on a conveyor belt. The concept of taking an analogue reference value, converting this to digital information, and then using computation procedures to update the reference value represents a considerable step forward in detecting systems, particularly paper sheet detecting systems. Although this concept is particularly appropriate for use with a system where the capacitance of the object or objects is measured, the analogue input information could alternatively come from optical measurements, or indeed any other form of measurement performed on the object or objects.

CLAIMS

1. A method of detecting a change in number of an object or objects, characterised by sensing a parameter of one or a predetermined number of such objects, from the sensed information generating a digital signal representing the parameter value, using the digital signal to set up a reference level within digital processing means (20), repeating the sensing step for further such objects, using the digital processing means (20) to determine for each sensing step whether the sensed parameter value lies within predetermined limits relative to the reference level, updating the reference level in said digital processing means to reflect changes in the sensed parameter value for said one or said predetermined number of said objects, and actuating indicating and/or control means (25, 26, 27) whenever the sensed parameter value falls outside said predetermined limits.

2. A method as claimed in claim 1, characterised in that the sensed parameter is the change in capacitance between a pair of plates (12a, 12b) produced by the presence or absence of said object or objects adjacent to said plates.

3. A method as claimed in claim 1 or 2, characterised in that the updating of the reference level in the digital processing means (20) is effected by computing the average sensed parameter value over a predetermined number of sensing steps and using this computed average as a new reference level.

4. A method as claimed in claim 1, 2 or 3, characterised in that the object or objects is/are one or a plurality of sheets of paper, card or like material.

5. Apparatus for detecting a change in number of an object or objects, comprising sensing means to sense a parameter of one or a predetermined number of such objects located in a sensing zone, characterised by converter means (18) to generate from the sensed information a digital signal representing the parameter value, digital processing means (20) arranged to receive said digital signal and in accordance therewith to set up a reference level with tolerance limits, said digital processing means (20) also being arranged to update the reference level at predetermined intervals to reflect changes in the sensed parameter value, and output means to carry signals indicative of whenever the sensed parameter value falls outside said predetermined limits.

6. Apparatus as claimed in claim 5, characterised in that the sensing means is arranged to sense changes in capacitance produced by the presence or absence of said object or objects in the sensing zone.

7. Apparatus as claimed in claim 6, characterised in that the sensing means comprises a plate (10) having two spaced areas (12a, 12b) of electrically conductive material on one face thereof, with said two areas being arranged to be connected to respective different electrical potentials.

8. Apparatus as claimed in claim 6, characterised in that the sensing means comprises two parallel spaced plates (31, 32) arranged to be connected to respective different electrical potentials thereby to define the sensing zone therebetween.

9. Apparatus as claimed in claim 6, 7 or 8, characterised by screening means (16a, 16b) adjacent to the sensing means.

10. Apparatus as claimed in any of claims 5 to 9, characterised in that said converter means (18) is a capacitance-to-frequency analogue-to-digital converter.

11. Apparatus as claimed in any of claims 5 to 10, characterised in that said digital processing means (20) comprises a microprocessor.

12. A collating machine arranged to collate sheets of paper, card or like material from a plurality of stacks of such sheets and equipped with detecting apparatus as claimed in any of claims 5 to 11 to detect misfeeding of sheets from said stacks.

13. A collating machine as claimed in claim 12, comprising a circular table (34, 35) on which said stacks are positioned, said table being provided with one or more slots therethrough down through which the bottommost sheet of each stack is caused to travel, and said detecting apparatus being fitted with said sensing means (10) in at least one surface of the or each slot.

FIG. 1

FIG. 2

FIG. 3

FIG. 4

# EUROPEAN SEARCH REPORT

**0086097**

Application number

EP 83 30 0576

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | LU-A- 83 624 (FRANCOTYP GmbH) *The whole document* | 1-12 | B 65 H 7/02 G 06 K 13/06 |
| Y | GB-A-2 013 632 (VEB POLYGRAPH LEIPZIG) *Page 1, lines 17-55 and 96-99* | 1,2,7, 9 | |
| Y | US-A-3 464 549 (ARMBRUSTER) *Abstract; column 1, line 59 to column 2, line 41* | 3 | |
| Y | US-A-3 966 186 (HELM) | 12 | |
| Y | US-A-3 652 078 (SATHER) *Column 2, lines 15-26* | 1,12 | |
| A | DE-A-2 426 642 (STOCK) *Pages 3,4* | 1 | |

TECHNICAL FIELDS SEARCHED (Int. Cl. ³)

B 07 C
B 65 H
G 06 K
G 06 M

The present search report has been drawn up for all claims

| Place of search THE HAGUE | Date of completion of the search 29-04-1983 | Examiner PESCHEL W. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82